(19) **Europäisches Patentamt**

**European Patent Office**

**Office européen des brevets**

(11) **EP 0 539 997 B1**

(12) **EUROPEAN PATENT SPECIFICATION**

(45) Date of publication and mention
of the grant of the patent:
**10.07.1996 Bulletin 1996/28**

(51) Int. Cl.$^6$: **A01G 25/06**

(21) Application number: **92118527.8**

(22) Date of filing: **29.10.1992**

(54) **Negative pressure-difference water supply system**

Wasserversorgungssystem mittels negativen Druckunterschiedes

Système d'alimentation d'eau basé sur la différence entre pressions négatives

(84) Designated Contracting States:
**AT BE CH DE DK ES FR GB GR IE IT LI LU MC NL PT SE**

(30) Priority: **30.10.1991 JP 285144/91**

(43) Date of publication of application:
**05.05.1993 Bulletin 1993/18**

(73) Proprietor: **Kubota, Minoru
Nishimatsuura-gun, Saga-Ken (JP)**

(72) Inventor: **Kubota, Minoru
Nishimatsuura-gun, Saga-Ken (JP)**

(74) Representative: **Sajda, Wolf E., Dipl.-Phys. et al
MEISSNER, BOLTE & PARTNER
Widenmayerstrasse 48
D-80538 München (DE)**

(56) References cited:
**DE-A- 2 721 272       DE-A- 2 746 936
GB-A- 2 005 972**

EP 0 539 997 B1

## Description

The present invention relates to a negative pressure difference water supplying system, comprising a water tank for containing therein water having a water surface at a first level; a water supplying pipe connected to the water tank and extending through an area to be water-supplied, the water supplying pipe has an inlet open within the tank under the first level; and at least one porous tube connected in the water supplying pipe within the area to be water-supplied for allowing water to penetrate through the porous tube out of the porous tube.

Such a water supplying system is known, for example, from GB-A-2 005 972. In that conventional water supplying system, a plurality of water feed pipes is connected to a water supply wherein the water feed pipe is provided with at least one hollow water-permeable member. In one embodiment described there, a single water supply source is provided which is located well above the level of the water feed pipe in order to supply the water-permeable members with a positive water pressure. In a second embodiment described there, the water supply pipes are connected both to a high-pressure water tank maintained at a higher level than the water-permeable members, and a low-pressure water tank maintained substantially at the same level as or lower than the water-permeable members to provide a negative pressure.

In all the conventional embodiments described in GB-A-2 005 972, the water feed pipe has an open end terminating in the area to be water-supplied. Hence, the conventional system can only supply water to the area but is not provided with any means for receiving water from the area even if the water content thereof is high.

In order to properly grow farm plants, a proper amount of water, nutrient elements, sunshine and the like are indispensable and in particular, the water supply is extremely important for the proper growth of the plants because too scarce water can kill the plants and too much water can cause diseases such as root rot or the like.

Conventional water supply systems include one in which an underground water level is provided within soil to supply a suitable amount of water by means of the capillary ascending action, and one in which pressurized porous tubes are embedded within the soil to supply water.

However, these systems have turned out to be high in water loss due to a downward permeation of water into the soil; also, it is difficult to regulate the moisture in the soil by simply adjusting the ground water table, and sometimes this results in an undesirable over-supplying of water.

Accordingly, a negative pressure difference water supply system which utilizes the negative water pressure difference in the soil as illustrated in Fig. 3 has been proposed. In Fig. 3, the conventional negative pressure difference water supply system comprises a water tank containing water 2 up to a water level 3 which is higher than a ground water table 4. This difference in height corresponds to a negative pressure $\Delta h$ of the water at the level 3. The water tank 1 is connected below the water level 3 thereof to one end of a pipe 5 of which the other end is connected to a porous tube 6 made for example of a ceramic or a porcelain. The porous tube 6 is a hollow member having an open end 7 connected to the pipe 5 and a closed end 8. The porous tube 6 is buried within soil 9 at a level 10 higher than the water level 3 within the water tank 1, providing a negative pressure difference hp relative to the level 3. Thus, the negative water head at the porous tube 6 relative to the ground water table 4 is hs, which is the sum of $\Delta h$ and hp.

Excluding downward permeation of water by gravitation, the amount of water in the soil of farmland normally decreases by absorption of water into farm products and by water consumption due to evaporation of water from the soil surface.

At that time, the negative pressure hs of water content in the soil 9 increases. When the porous tube 6 buried in the effective area of farm product roots is saturated with water and the water pressure in the porous tube is regulated at a certain negative pressure hp, a negative pressure difference ( $\Delta h = |hs - hp|$ ) arises between the water in the soil and the water in the porous tube 6.

Thus, according to the negative pressure difference water supply system, the moisture tension distribution in the soil can be maintained optimum by suitably regulating the negative pressure within the porous ceramic tube by controlling the water surface level, so that the water loss due to the downward permeation and adverse affects on plants due to the over-supplying of the water can be decreased, and that the water supply can be self-regulated in amount and continuous.

However, in the conventional negative pressure water supply system as above described, when the ambient temperature increases, the dissolved gas within the water which remains in the porous tube and supply pipe vaporizes so that bubbles are generated which keep staying in the porous ceramic tube. Therefore, the negative pressure condition maintained by the surface tension of the water in the open pores in the porous ceramic tube is destroyed and also the air outside of the tube is introduced into the ceramic tube due to the negative pressure difference, so that the water supply by the negative pressure difference is totally interrupted.

While it has been proposed to connect an air bleeding pump at a junction between the porous ceramic tube and the pipe in order to purge the bubbles, the problem cannot be solved in this manner. Since the ceramic porous tube is embedded within the soil and it is impossible to confirm the presence of the bubbles within the tube, the air bleeding operation must periodically be achieved irrespective of whether or not the ceramic porous tubes actually contain bubbles. This requires much working time and energy. Also, since one air pump must be provided for each ceramic tube, the installation cost becomes extremely high and the entire system becomes very complicated in structure.

Accordingly, one object of the present invention is to provide a negative pressure difference water supply system which is free from the above-discussed problems of the conventional water supplying system, and in which water can be supplied automatically in accordance with the necessity.

Another object of the present invention is to provide a negative pressure difference water supply system which is simple in structure and inexpensive and also simple in maintenance.

According to a first aspect of the present invention, the object is solved by a negative pressure difference water supplying system of the type specified above which is characterized in that the water supplying pipe has an inlet end open within the tank under the first level and an outlet end open at a second level lower than the first level, wherein the water supplying pipe extends through a third level which is higher than the first level, and in that the at least one porous tube connected in the water supplying pipe is connected between the inlet end and the outlet end of the water supplying pipe allowing water to penetrate through the respective porous tube alternatively into or out of the respective porous tube in accordance with a relative water pressure difference between the inside and the outside of the respective porous tube.

According to a second aspect of the invention, the object is solved by a negative pressure difference water supplying system of the type specified above which is characterized in that the water supplying pipe has an inlet end open within the tank under the first level and an outlet end open above the water tank at a second level, wherein the water supplying pipe extends through a third level which is higher than the first level, and in that the at least one porous tube connected in the water supplying pipe is connected between the inlet end and the outlet end of the water supplying pipe allowing water to penetrate through the respective porous tube alternatively into or out of the respective porous tube in accordance with a relative water pressure difference between the inside and the outside of the respective porous tube, and in that a pump is connected in the water supplying pipe downstream of the porous tube.

Further developments of the water supplying system according to the present invention have been specified in the dependent claims.

With the water supplying system according to the invention, the object is solved in a satisfying and advantageous manner. Since the arrangement is formed in a closed loop wherein the outlet end of the water supplying pipe is connected to a reservoir or the water tank itself, the respective porous tubes are able to receive excessive water from the surrounding area which is then discharged to the respective tank.

The present invention will become readily apparent from the following detailed description of preferred embodiments of the present invention taken in conjunction with the accompanying drawings, in which:

Fig. 1   is a schematic diagram of one embodiment of the negative pressure difference water supply system of the present invention;

Fig. 2   is a schematic diagram of another embodiment of the negative pressure difference water supply system of thepresent invention; and

Fig. 3   is a schematic diagram of a conventional negative pressure difference water supply system.

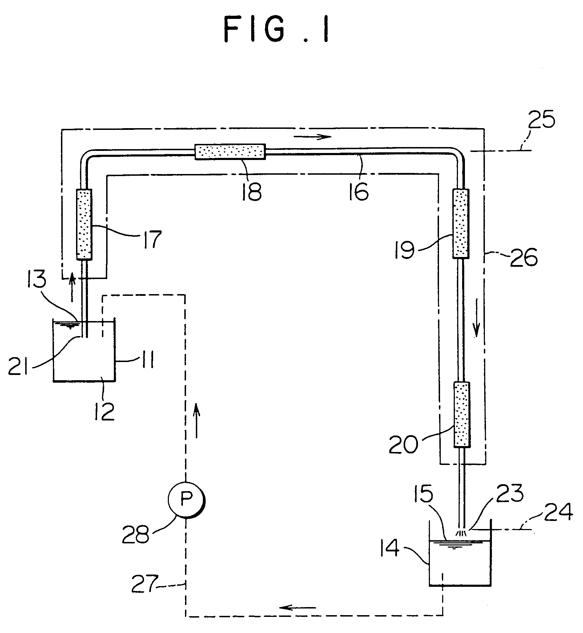

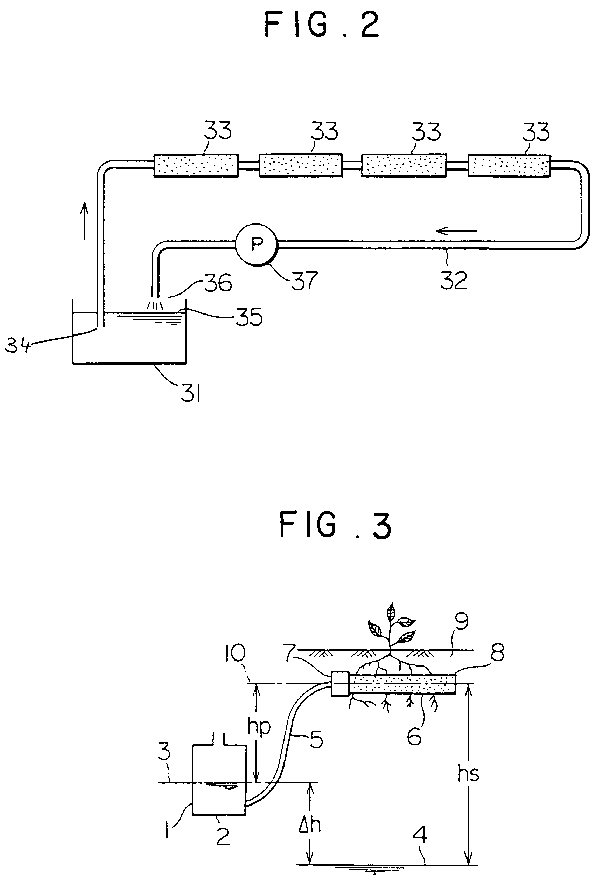

Fig. 1 schematically illustrates one embodiment of the negative pressure difference water supply system of the present invention. The negative pressure difference water supply system comprises a water supplying tank 11 containing water 12 therein up to a first water surface level 13 and a reservoir tank or a water receiving tank 14 for containing water up to a water level 15 lower than the first level 13. The first and the second tanks 11 and 14 are connected with each other by a water supplying pipe 16 having connected therein four ceramic porous tubes 17, 18, 19 and 20. The water supplying pipe 16 has an inlet end 21 open within the water supplying tank 11 at a position lower than the first level 13, and an outlet end 23 open at a second level 24 lower than the first level 13 but slightly higher than the water surface level 15 within the second tank 14.

In the illustrated embodiment, the water supplying pipe 16 has a general configuration of an inverted "U" which constitutes a siphon arrangement. In other words, the water supplying pipe 16 extends from the first water tank 11 to the second water tank 14 through a third level 25 higher than the water level 13 within the first tank 11. The ceramic porous tubes 17 to 20 inserted in the water supplying pipe 16 are located in a region 26 in which water is to be supplied by the system of the present invention. This system allows water to be supplied through the porous tubes 17 to 20 in accordance with a relative water pressure difference between the inside and the outside of the porous tubes 17 to 20.

The water supply system further comprises a return pipe 27 connecting the water reservoir tank 14 to the water supply tank 11 for returning the water in the reservoir tank 14 to the higher water supply tank 11, and a circulating pump 28 connected in the return pipe 27 for pumping the water from the reservoir tank 14 to the water supplying tank 11.

In the negative pressure difference water supply system illustrated in Fig. 1, because of the atmospheric pressure difference between the first water surface level 13 and the level 24 at which the outlet end 23 of the pipe 16 opens and discharges the water, a negative pressure is generated within the water supplying pipe 16 and the ceramic porous tubes 17 to 20 relative to the water pressure within the tank 11. Therefore, the water 12 within the tank 11 is sucked into the water supplying pipe 16 through the inlet end 21 and flows through the ceramic porous tubes 17 to 20 and is discharged from the outlet end 23 into the reservoir tank 14. Thus, the ceramic porous tubes 17 to 20 are always filled with fresh water which flows through the pipe 16.

Therefore, when the pressure of the water in the porous tubes 17 to 20 is higher than the water pressure in the soil, that is, when the water level in the soil is relatively low and the soil is dry, the water in the porous tubes 17 to 20 seeps from the tubes through the porous tube walls into the surrounding soil. On the other hand, when the water pressure in the soil is higher than the water pressure of the porous tubes 17 to 20, that is, when the water level in the soil is relatively high and the soil contains an excess amount of water, the water in the soil seeps into the porous tubes 17 to 20 to be discharged into the reservoir tank 14. Thus, the water content in the soil is automatically kept at a suitable level without the need for any special operation.

While a pressure difference appears between the ceramic porous tubes 17 to 20 when they are positioned at different levels as illustrated in Fig. 1, the pressure difference between the respective tubes is compensated for by the water absorbing ability of the plants.

According to the water supply system of the present invention, the flow of water from the water supply tank 11 to the reservoir tank 14 is generated by a siphon arrangement which does not need any pressurizing means such as a pump, so that the water seepage into the soil from the porous tubes due to the pressurization of the water by the flow does not take place. Also, the negative pressure difference generated in the porous tubes can be determined at an appropriate value by suitably adjusting the level difference between the water tank 11 and the reservoir tank 14.

Fig. 2 illustrates another embodiment of the present invention in which the negative pressure difference water supply system comprises a single water tank 31. The water supply system also comprises a circulating pipe 32 having inserted therein a plurality of ceramic porous tubes 33 similar to those of the previous embodiment. The circulating pipe 32 has an inlet end 34 inserted into the tank 31 and opening under a water level 35 and an outlet end 36 above the water level 35. The circulating pipe 32 has a pump 37 disposed downstream of the porous tubes 33 so that a negative pressure sufficient to suck the water in the tank 31 through the inlet end 34 and to discharge it from the outlet end 36 is generated within the pipe 32.

Also in this embodiment, the water in the ceramic porous tubes 33 is allowed to seep out of or into the porous tubes 33 through their porous walls according to the pressure difference between the inside and the outside of the porous tubes 33.

As has been described, according to the negative pressure difference water supply system of the present invention, gas bubbles formed in the ceramic porous tubes embedded in the soil can automatically be purged by the water flow within the supply pipes with a relatively simple inexpensive siphon arrangement. In the applicant's pilot farm of about 270 m$^2$, water supplying pipes have a diameter of 8 mm, and a small pump of 10 Watt was sufficient.

The roots of the plant which generally extend in continuous search for water and nutrient elements do not have to expand for a long distance because the water supply is readily available in the vicinity of the plant roots when the negative pressure difference water supply system of the present invention is utilized, so that the amount of soil needed for growing the plant may be small.

Any excess amount of water is not supplied to the soil, so that the soil is not hardened due to any overwatering. Therefore, the soil is not hard and has a sufficient oxygen supply even after the cultivation, so that a subsequent cultivation can be carried out without the need for plowing.

Also, since the watering is carried out underground in this system, the pathogenic fungi within the soil are not spread by the water splashes of surface watering or rain, thereby decreasing plant damages by disease.

## Claims

1. A negative pressure difference water supplying system, comprising:

   - a water tank (11) for containing therein water (12) having a water surface at a first level (13),
   - a water supplying pipe (16) connected to the water tank (11) and extending through an area (26) to be water-supplied, the water supplying pipe (16) has an inlet end (21) open within the tank (11) under the first level (13) and an outlet end (23) at a second level (24) lower than the first level (13), and
   - at least one porous tube (17 to 20) connected in the water supplying pipe (16) within the area (26) to be water-supplied for allowing water to penetrate through the porous tube (17 to 20) out of the porous tube,

   characterized in that
   the water supplying pipe (16) has an open outlet end (23),
   wherein the water supplying pipe (16) extends through a third level (25) which is higher than the first level (13),
   and in that the at least one porous tube (17 to 20) connected in the water supplying pipe (16) is connected between the inlet end (21) and the outlet end (23) of the water supplying pipe (16) allowing water to penetrate through the respective porous tube (17 to 20) alternatively into or out of the respective porous tube (17 to 20) in accordance with a relative water pressure difference between the inside and the outside of the respective porous tube (17 to 20).

2. The system according to claim 1, further comprising

- a return pipe (27) connecting the outlet end (23) of the water supplying pipe (16) to the water supplying tank (11) and
- a circulating pump (28) connected in the return pipe (27) for returning the water from the outlet end (23) to the water supplying tank (11) through the return pipe (27).

3. The system according to claim 1 or 2, further comprising a water reservoir (14) for receiving water discharged from the outlet end (23) of the water supplying pipe (16).

4. The system according to claim 3, further comprising

- a circulating pipe (27) connected between the water supplying tank (11) and the water reservoir (14) and
- a circulating pump (28) connected in the circulating pipe (27) for supplying water from the reservoir (14) to the water supplying tank (11) through the circulating pipe (27).

5. The system according to any of claims 1 to 4, wherein the porous tube (17 to 20) is made of a ceramic material.

6. The system according to any of claims 1 to 5, wherein the at least one porous tube (17 to 20) comprises a plurality of porous tubes.

7. The system according to claim 6, wherein the plurality of porous tubes (17 to 20) is positioned at at least two different levels.

8. A negative pressure difference water supplying system, comprising:

- a water tank (31) for containing therein water having a water surface at a first level (35),
- a water supplying pipe (32) connected to the water tank (31) and extending through an area to be water-supplied, the water supplying pipe (32) has an inlet end (34) open within the tank (31) under the first level (35) and
- at least one porous tube (33) connected in the water supplying pipe (32) within the area to be water-supplied for allowing water to penetrate through the porous tube (33) out of the porous tube,

characterized in that the water supply pipe (32) has an outlet end (36) open above the water tank (31) at a second level, wherein the water supplying pipe (32) extends through a third level which is higher than the first level (35), and in that the at least one porous tube (33) connected in the water supplying pipe (32) is connected between the inlet end (34) and the outlet end (36) of the water supplying pipe (32) allowing water to penetrate through the respective porous tube (33) alternatively into or out of the respective porous tube (33) in accordance with a relative water pressure difference between the inside and the outside of the respective porous tube (33), and in that a pump (37) is connected in the water supplying pipe (32) downstream of the porous tube (33).

9. The system according to claim 8, wherein the porous tube (33) is made of a ceramic material.

10. The system according to claim 8 or 9, wherein the at least one porous tube (33) comprises a plurality of porous tubes (33).

11. The system according to claim 10, wherein the plurality of porous tubes (33) is positioned at at least two different levels.

**Patentansprüche**

1. Mit Unterdruckdifferenz arbeitendes Wasserversorgungssystem, das folgendes aufweist:

- einen Wassertank (11), um darin Wasser (12) aufzunehmen, das eine Wasseroberfläche bei einem ersten Pegel (13) hat,
- eine Wasserzuführungsleitung (16), die mit dem Wassertank (11) verbunden ist und sich durch einen mit Wasser zu versorgenden Bereich (26) erstreckt, wobei die Wasserzuführungsleitung (16) ein Einlaßende (21), das innerhalb des Tanks (11) unter dem ersten Pegel (13) offen ist, und ein Auslaßende (23) bei einem zweiten Pegel (24) besitzt, der niedriger ist als der erste Pegel (13), und
- mindestens ein poröses Rohr (17 bis 20), das innerhalb des mit Wasser zu versorgenden Bereiches (26) in die Wasserzuführungsleitung (16) geschaltet ist, um es zu ermöglichen, daß Wasser durch das poröse Rohr (17 bis 20) hindurch aus dem porösen Rohr nach außen austritt,

dadurch gekennzeichnet, daß die Wasserzuführungsleitung (16) ein offenes Auslaßende (23) aufweist, wobei sich die Wasserzuführungsleitung durch einen dritten Pegel (25) erstreckt, der höher liegt als der erste Pegel (13), und daß das mindestens eine poröse Rohr (17 bis 20), das in die Wasserzuführungsleitung (16) geschaltet ist, zwischen das Einlaßende (21) und das Auslaßende (23) der Wasserzuführungsleitung (16) geschaltet ist, um es zu ermöglichen, daß Wasser durch das jeweilige poröse Rohr (17 bis 20) alternativ in das oder aus dem jeweiligen porösen Rohr (17 bis 20) eindringt bzw. austritt, und zwar in Abhängigkeit von einer relativen Wasserdruckdifferenz zwischen der Innenseite und der Außenseite des jeweiligen porösen Rohres (17 bis 20).

2. System nach Anspruch 1,
das ferner folgendes aufweist:

- eine Rückflußleitung (27), die das Auslaßende (23) der Wasserzuführungsleitung (16) mit dem Wasserversorgungstank (11) verbindet, und
- eine Umwälzpumpe (28), die in die Rückflußleitung (27) geschaltet ist, um das Wasser von dem Auslaßende (23) durch die Rückflußleitung (27) zu dem Wasserversorgungstank (11) zurückzuführen.

3. System nach Anspruch 1 oder 2,
das ferner ein Wasserreservoir (14) aufweist, um Wasser aufzunehmen, das aus dem Auslaßende (23) der Wasserzuführungsleitung (16) abgegeben wird.

4. System nach Anspruch 3,
das ferner folgendes aufweist:

- eine Umwälzleitung (27), die zwischen den Wasserversorgungstank (11) und das Wasserreservoir (14) geschaltet ist, und
- eine Umwälzpumpe (28), die in die Umwälzleitung (27) geschaltet ist, um Wasser von dem Reservoir (14) durch die Umwälzleitung (27) zu dem Wasserversorgungstank (11) zurückzuführen.

5. System nach einem der Ansprüche 1 bis 4,
wobei das poröse Rohr (17 bis 20) aus einem Keramikmaterial besteht.

6. System nach einem der Ansprüche 1 bis 5,
wobei das mindestens eine poröse Rohr (17 bis 20) eine Vielzahl von porösen Rohren aufweist.

7. System nach Anspruch 6,
wobei die Vielzahl von porösen Rohren (17 bis 20) in mindestens zwei verschiedenen Pegeln angeordnet ist.

8. Mit Unterdruckdifferenz arbeitendes Wasserversorgungssystem, das folgendes aufweist:

- einen Wassertank (31), um darin Wasser aufzunehmen, das eine Wasseroberfläche bei einem ersten Pegel (35) hat,
- eine Wasserzuführungsleitung (32), die an den Wassertank (31) angeschlossen ist und sich durch einen mit Wasser zu versorgenden Bereich erstreckt, wobei die Wasserzuführungsleitung (32) ein Einlaßende (34) besitzt, das innerhalb des Tanks (31) unter dem ersten Pegel (35) offen ist und
- mindestens ein poröses Rohr (33), das innerhalb des mit Wasser zu versorgenden Bereiches in die Wasserzuführungsleitung (32) geschaltet ist, um es zu ermöglichen, daß Wasser durch das poröse Rohr (33) hindurch aus dem porösen Rohr hinaus austritt,

dadurch gekennzeichnet,
daß die Wasserzuführungsleitung (32) ein Auslaßende (36) besitzt, das oberhalb des Wassertanks (31) bei einem zweiten Pegel offen ist, wobei die Wasserzuführungsleitung sich durch einen dritten Pegel erstreckt, der höher ist als der erste Pegel (35),
und daß das mindestens eine poröse Rohr (33), das in die Wasserzuführungsleitung (32) geschaltet ist, zwischen das Einlaßende (34) und das Auslaßende (36) der Wasserzuführungsleitung (32) geschaltet ist, um es zu ermöglichen, daß Wasser durch das jeweilige poröse Rohr (33) alternativ in das oder aus dem jeweiligen porösen Rohr (33) eindringt bzw. austritt, und zwar in Abhängigkeit von einer relativen Wasserdruckdifferenz zwischen der Innenseite und der Außenseite des jeweiligen porösen Rohres (33), und daß eine Pumpe (37) stromabwärts von dem porösen Rohr (33) in die Wasserzuführungsleitung (32) geschaltet ist.

9. System nach Anspruch 8,
wobei das poröse Rohr aus einem Keramikmaterial besteht.

10. System nach Anspruch 8 oder 9,
wobei das mindestens eine poröse Rohr (33) eine Vielzahl von porösen Rohren (33) aufweist.

11. System nach Anspruch 10,
wobei die Vielzahl von porösen Rohren in mindestens zwei verschiedenen Pegeln angeordnet ist.

**Revendications**

1. Système de distribution d'eau par différence de pressions négatives, comprenant :

un réservoir d'eau (11) pour contenir de l'eau (12) présentant une surface d'eau à un premier niveau (13) ;

un tuyau de distribution d'eau (16) connecté au réservoir d'eau (11) et passant dans une zone (26) à alimenter en eau, le tuyau de distribution d'eau (16) ayant une extrémité d'entrée (21) qui débouche dans le réservoir (11) au-dessous du premier niveau (13) et une extrémité de sortie (23) à un deuxième niveau (24) plus bas que le premier niveau (13), et

au moins un tube poreux (17 à 20) connecté dans le tuyau de distribution d'eau (16), dans la zone (26) à alimenter en eau, pour permettre à l'eau de traverser le tube poreux (17 à 20) et de sortir du tube poreux,
caractérisé en ce que :

le tuyau de distribution d'eau (16) comporte une extrémité de sortie ouverte (23),

le tuyau de distribution d'eau (16) passe à un troisième niveau (25) qui est plus haut que le premier niveau (13), et

ledit au moins un tube poreux (17 à 20) connecté dans le tuyau de distribution d'eau (16) est connecté entre l'extrémité d' entrée (21) et l'extrémité de sortie (23) du tuyau de distribution d'eau (16), ce qui permet à l'eau de traverser le tube poreux respectif (17 à 20) alternativement vers l'intérieur ou l'extérieur du tube poreux respectif (17 à 20) en fonction d'une différence de pression d'eau relative entre l'intérieur et l'extérieur du tube poreux respectif (17 à 20) .

2. Système suivant la revendication 1, comprenant en outre :

un tuyau de retour (27) reliant l'extrémité de sortie (23) du tuyau de distribution d'eau (16) au réservoir de fourniture d'eau (11), et

une pompe de circulation (28) montée dans le tuyau de retour (27) pour renvoyer l'eau de l'extrémité de sortie (23) au réservoir de fourniture d'eau (11) par l'intermédiaire du tuyau de retour (27).

3. Système suivant la revendication 1 ou 2, comprenant en outre un réservoir d'eau (14) pour recevoir l'eau sortant de l'extrémité de sortie (23) du tuyau de distribution d'eau (16).

4. Système suivant la revendication 3, comprenant en outre :

un tuyau de circulation (27) connecté entre le réservoir de fourniture d'eau (11) et le réservoir de réception d'eau (14), et

une pompe de circulation (28) connectée dans le tuyau de circulation (27) pour refouler l'eau du réservoir (14) au réservoir de fourniture d'eau (11) par l'intermédiaire du tuyau de circulation (27).

5. Système suivant une quelconque des revendications 1 à 4, dans lequel le tube poreux (17 à 20) est fabriqué en une matière céramique.

6. Système suivant une quelconque des revendications 1 à 5, dans lequel ledit au moins un tube poreux (17 à 20) comprend une pluralité de tubes poreux.

7. Système suivant la revendication 6, dans lequel les tubes poreux de ladite pluralité de tubes poreux (17 à 20) sont placés à au moins deux niveaux différents.

8. Système de distribution d'eau par différence de pressions négatives, comprenant :

un réservoir d'eau (31) pour contenir de l'eau présentant une surface d'eau à un premier niveau (35 ),

un tuyau de distribution d'eau (32) relié au réservoir d'eau (31) et passant dans une zone à alimenter en eau, le tuyau de distribution d'eau (32) ayant une extrémité d'entrée (34) qui débouche dans le réservoir (31) au-dessous du premier niveau (35), et

au moins un tube poreux (33) connecté dans le tuyau de distribution d'eau (32) dans la zone à alimenter en eau, pour permettre à l'eau de traverser le tube poreux (33) vers l'extérieur du tube poreux, caractérisé en ce que :

le tuyau de distribution d'eau (32) comporte une extrémité ouverte (36) qui débouche au-dessus du réservoir d'eau (31) à un deuxième niveau,

le tuyau de distribution d'eau (32) passe à un troisième niveau qui est plus haut que le premier niveau (35),

ledit au moins un tube poreux (33) connecté dans le tuyau de distribution d'eau (32) est connecté entre l'extrémité d'entrée (34) et l'extrémité de sortie (36) du tuyau de distribution d'eau (32), ce qui permet à l'eau de traverser le tube poreux respectif (33) alternativement vers l'intérieur ou l'extérieur du tube poreux respectif (33) en fonction d'une différence de pression d'eau relative entre l'intérieur et l'extérieur du tube poreux respectif (33), et

une pompe (37) est montée dans le tuyau de distribution d'eau (32) en aval du tube poreux (33).

9. Système suivant la revendication 8, dans lequel le tube poreux (33) est fabriqué en une matière céramique.

10. Système suivant la revendication 8 ou 9, dans lequel ledit au moins un tube poreux (33) comprend une pluralité de tubes poreux (33).

11. Système suivant la revendication 10, dans lequel les tubes poreux de ladite pluralité de tubes poreux (33) sont placés à au moins deux niveaux différents.

# FIG . 1

# FIG . 2

# FIG . 3